# EUROPÄISCHE PATENTSCHRIFT

(11) **EP 1 440 519 B1**
(45) Veröffentlichungstag und Bekanntmachung des Hinweises auf die Patenterteilung: **02.08.2006**
(21) Anmeldenummer: 02781111.6
(22) Anmeldetag: 26.09.2002
(51) Int. Cl.: H04B 1/40

(54) **Hardware-Struktur und Verfahren für eine Sende-Empfangseinrichtung mit konfigurierbaren Coprozessor für Mobilfunkanwendungen**
Material structure designed for a transceiver device for use in mobile radiotelephony, and data processing method in such a transmitter device
Structure materiel destinée à ine dispositif emetteur-récepteur en vue d'application en radiotéléphonie mobile, et procédé de traitement de données dan un tel dispositif emetteur-récepteur

(30) Priorität: 31.10.2001 DE 10153767
(43) Veröffentlichungstag der Anmeldung: 28.07.2004
(73) Patentinhaber: Infineon Technologies AG, 81669 München (DE)
(72) Erfinder: BECKER, Burkhard, 85737 Ismaning (DE); LE, Thuyen, 81927 München (DE)
(74) Vertreter: Lange, Thomas
(86) Internationale Anmeldenummer: PCT/DE2002/003657
(87) Internationale Veröffentlichungsnummer: WO 2003/041322

(56) Entgegenhaltungen:
- EP-A- 0 935 204
- WO-A-00/69084

## Beschreibung

Hardware-Struktur für eine Sende-Empfangs-Einrichtung für Mobilfunkanwendungen und Verfahren zur Verarbeitung von Daten in einer solchen Sende-Empfangs-Einrichtung

Die Erfindung betrifft eine Sende-Empfangs-Einrichtung für Mobilfunkanwendungen, insbesondere für eine Mobilstation der dritten oder höheren Generation, sowie ein Verfahren zur Verarbeitung von Daten in einer solchen Sende-Empfangs-Einrichtung.

Der Hardware-Architektur kommt in Mobilfunk-Sende-Empfangs-Einrichtungen eine wichtige Rolle zu, da durch sie kritische Parameter wie beispielsweise der Energieverbrauch und die Datenverarbeitungsgeschwindigkeit in starkem Maße beeinflußt wird. Moderne Mobilfunk Sender-Empfänger umfassen stets einen Mikroprozessor, zumeist einen digitalen Signalprozessor (DSP), welcher eine zentrale Rolle bei Datenverarbeitungsaufgaben wie beispielsweise der Entzerrung und der Kanaldekodierung spielt.

Grundsätzlich ist es möglich, die gesamte Entzerrung der Empfangsdaten allein von einem mit entsprechender Software betriebenen DSP vornehmen zu lassen. Diese im Hinblick auf die Hardware-Architektur denkbar einfachste Lösung weist jedoch eine Reihe von Nachteilen auf. Insbesondere müssen sehr leistungsstarke und damit teuere DSP eingesetzt werden, um die geforderte Signalverarbeitungsgeschwindigkeit zu gewährleisten. Darüberhinaus weisen solche DSP eine für Mobilstationen inakzeptabel hohe Leistungsaufnahme auf.

Zur Reduzierung des Stromverbrauchs und der MIPS-(Million Instructions Per Second-)Belastung des Mikroprozessors bzw. DSPs werden Prozessor- bzw. DSP-Aufgaben in spezielle Hardware-Pheripherals übertragen. Beispielsweise ist es bereits bekannt, die Ausführung des ACD-(Add Compare Select-)Schrittes bei der Viterbi-Entzerrung oder der Viterbi-Dekodierung durch geeignete Hardware-Datenpfade zu unterstützen. Diese führen eine Berechnung von bestimmten, immer wiederkehrenden Rechenaufgaben durch und entlasten auf diese Weise den DSP. Nachteilig ist jedoch, dass durch Verwendung solcher Hardware-Pheripherals die Flexibilität der Datenverarbeitung stark eingeschränkt wird. Die damit verbundenen Schwierigkeiten verschärfen sich bei Mobilfunksystemen höherer Generation, welche ein flexibles Dienste- und Datenverwaltungsmanagement erfordern.

In der Datenverarbeitungstechnik ist es allgemein bekannt, zur Unterstützung frei programmierbarer Prozessoren aufgabenspezifische Coprozessoren vorzusehen. Der Coprozessor übernimmt die Ausführung komplizierter Operationen, die den Prozessor stark belasten würden. Die bekanntesten Typen sind A-rithmetik-Coprozessoren zur Ausführung der vier Grundrechenarten und gegebenenfalls transzendenter Funktionen sowie Graphik-Coprozessoren. Der Datenaustausch zwischen dem Prozessor und dem Coprozessor findet dabei über ein Coprozessor-Interface statt.

In der europäischen Patentschrift EP 0 789 882 B1 ist eine Multi-Media-Prozessorarchitektur beschrieben, bei welcher einem frei programmierbaren Prozessor mehrere aufgabenspezifische Prozessoren mit hoher Leistungsdichte parallel geschaltet sind. Die aufgabenspezifischen Prozessoren sind entweder nicht programmierbar oder besitzen einen niedrigen Programmierbarkeitsgrad, d.h. ihr Verhalten ist durch Parametervorgabe veränderbar. Durch den niedrigen Programmierbarkeitsgrad können diese Prozessoren jeweils in unterschiedlichen Algorithmen eingesetzt werden, wobei die gleichen Grundfunktionen, jedoch mit unterschiedlichen Parameterwerten, ausgeführt werden. Die Aktualisierung von Parameterwerten für einen bestimmten Algorithmus - d.h. das Konfigurieren des aufgabenspezifischen Prozessors - erfolgt typischerweise mit einer wesentlich niedrigeren Geschwindigkeit als die Datenverarbeitungsgeschwindigkeit. Das Nachladen von Parametern kann über einen separaten Bus erfolgen.

Der Erfindung liegt die Aufgabe zugrunde, eine Sende-Empfangs-Einrichtung mit einer für Mobilfunkanwendungen vorteilhaften Hardware-Architektur zu schaffen. Insbesondere soll die Architektur eine ausreichende Flexibilität der Datenverarbeitung bei Gewährleistung der strikten Anforderungen hinsichtlich des Energieverbrauchs und der Verarbeitungsgeschwindigkeit ermöglichen. Ferner zielt die Erfindung darauf ab, ein diese Kriterien erfüllendes Datenverarbeitungsverfahren für Mobilfunkanwendungen zu schaffen.

Eine ähnliche Sende-Empfangs-Einrichtung ist in der internationalen Patentanmeldung WO00/69084 A1 beschrieben.

Zur Lösung der Aufgabenstellung sind die Merkmale der unabhängigen Ansprüche vorgesehen. Vorteilhafte Ausgestaltungen und Weiterbildungen der Erfindung sind Gegenstand der Unteransprüche.

Demnach umfaßt eine erfindungsgemäße Sende-Empfangs-Einrichtung einen Mikroprozessor und eine Mehrzahl aufgabenspezifischer Prozessoren, welche konfigurierbar sind. Ein aufgabenspezifischer Prozessor heißt konfigurierbar, wenn eine Steuerung einer von dem aufgabenspezifischen Prozessor ausführbaren Grundfunktion durch Ändern von KonfigurationsParametern möglich ist, wobei der aufgabenspezifische Prozessor nach erfolgter Konfigurierung e.ine Datenverarbeitung entsprechend einer durch die Konfigurierung bestimmten Funktion durchführt. Die Kommunikation zwischen dem Mikroprozessor und den aufgabenspezifischen Prozessoren erfolgt über ein bidirektionales Prozessor-Interface. Dabei ist ein erster Bus zur Verbindung des dem Mikroprozessor zugeordneten Prozessor-Interface mit den aufgabenspezifischen Prozessoren vorgesehen. Ferner ist ein zweiter Bus vorgesehen, über den der Mikroprozessor und wenigstens einer der aufgabenspezifischen . Prozessoren in Datenaustauschverbindung stehen.

Dem Mikroprozessor ist eine Konfigurationstabelle zugeordnet, welche beispielsweise die aktuellen Konfigurierungen (Konfigurations-Parameter) eines oder mehrerer der aufgabenspezifischen Prozessoren enthält. Eine Umkonfigurierung eines aufgabenspezifischen Prozessors wird infolge oder in Abhängigkeit von einer zuvor erfolgten Umkonfigurierung eines anderen aufgabenspezifischen Prozessors oder in Abhängigkeit von ermittelten Ergebnisdaten desselben initiiert und durchgeführt. Daher befinden sich unter den Einträgen der Konfigurationstabelle vorzugsweise auch Einträge, die zuvor in einem anderen aufgabenspezifischen Prozessor berechnet und über das Prozessor-Interface zum Mikroprozessor übertragen wurden. Ist in Folge bestimmter Einflußgrößen (z.B. Benutzereingriff, Änderung des Betriebszustandes, Wahl eines anderen Mobilfunkstandards bei Mehrstandard-Empfängern) eine Umkonfigurierung eines aufgabenspezifischen Prozessors erforderlich, so werden die hierfür benötigten Konfigurationsbefehle durch Auswertung der Einträge der Konfigurationstabelle ermittelt. Der Mikroprozessor ist zum Konfigurieren der aufgabenspezifischen Prozessoren durch Übermittlung geeigneter Konfigurationsbefehle über das Prozessor-Interface ausgelegt.

Durch die Konfigurierbarkeit der aufgabenspezifischen Prozessoren wird eine flexible Datenverarbeitung in Bezug auf die von jedem aufgabenspezifischen Prozessor auszuführende Grundfunktion ermöglicht. Da jeder aufgabenspezifische Prozessor nach erfolgter Konfigurierung eine selbständige Datenverarbeitung entsprechend einer durch die Konfigurierung bestimmten Funktion durchzuführen vermag, weist er die für Hardware-Bausteine typische hohe Verarbeitungsgeschwindigkeit auf. Im Vergleich zu einer Software-basierten Programmabarbeitung weist die erfindungsgemäße Hardware-Struktur darüber hinaus in der Regel einen geringeren Strombedarf auf.

Die Verwendung einer Mehrzahl von derartig konfigurierbaren, aufgabenspezifischen Prozessoren ermöglicht die flexible Handhabung verschiedener Datenverarbeitungsaufgaben im Empfänger oder Sender. Der Mikroprozessor nimmt dabei vorzugsweise reine Verwaltungsaufgaben dar, d.h. liest Ergebnisdaten der aufgabenspezifischen Prozessoren aus und konfiguriert diese daraufhin in geeigneter Weise.

Durch die Zwei-Bus-Struktur wird erreicht, dass der Austausch von Kontrolldaten und Konfigurationsbefehlen sowie gegebenenfalls weiterer zeitkritischer Daten über einen separaten Bus (erster Bus) erfolgt und damit unabhängig von dem Datenverkehr über den zweiten-Bus ist. Daher kann auch bei einer hohen Verkehrsbelastung des zweiten Busses ein reibungsloser Austausch von Verwaltungsinformationen (Kontrolldaten, Konfigurationsbefehle) zwischen dem Mikroprozessor und den aufgabenspezifischen Prozessoren gewährleistet werden.

Vorzugsweise sind an den zweiten Bus weitere Hardware-Module und/oder externe Schnittstellen der Sende-Empfangs-Einrichtung angeschlossen.

Eine vorteilhafte Ausführungsform der Erfindung kennzeichnet sich dadurch, dass die mehreren aufgabenspezifischen Prozessoren über ein konfigurierbares Interface mit dem zweiten Bus verbindbar sind, und dass mittels eines vom Mikroprozessor über das Prozessor-Interface übertragenen Konfigurationsbefehls das konfigurierbare Interface einem bestimmten aufgabenspezifischen Prozessor zugeordnet werden kann. Die Übertragung von Verarbeitungsdaten von oder zum Mikroprozessor erfolgt dann ausschließlich über den zweiten Bus, der erste Bus bleibt dem Austausch von Verwaltungsinformationen vorbehalten.

Die aufgabenspezifischen Prozessoren können vielfältige Aufgaben übernehmen. Eine besonders bevorzugte Ausführungsvariante kennzeichnet sich dadurch, dass ein erster aufgabenspezifischer Prozessor eine RAKE-Datenverarbeitungsschaltung ist. Zweckmäßigerweise umfassen die Konfigurations-Parameter der RAKE-Datenverarbeitungsschaltung einen oder mehrere der folgenden Paramater: Betriebszustand eines RAKE-Fingers, Delay-Offset (d.h. Verzögerungszeit) eines RAKE-Fingers, Verwürfelungscode-Kennung für einen RAKE-Finger, Delay-Offset des Verwürfelungscodes für einen RAKE-Finger, Spreiz-Code-Kennung für einen RAKE-Finger, und Spreizfaktor für einen RAKE-Finger. Dieser Satz von Konfigurations-Parametern ermöglicht die gewünschte Flexibilität der RAKE-Datenverarbeitungsschaltung im Hinblick auf unterschiedliche algorithmische Datenverarbeitungsabläufe.

Eine weitere vorteilhafte Variante der erfindungsgemäßen Sende-Empfangs-Einrichtung kennzeichnet sich dadurch, dass ein zweiter aufgabenspezifischer Prozessor ein Searcher (d.h. eine Sucheinrichtung) ist. Die Aufgabe eines Searchers in einem Mobilfunk Sender-Empfänger besteht darin, die für die Signalakquisition und die Synchronisierung der RAKE-Finger benötigten Informationen zur Verfügung zu stellen. Demzufolge umfassen die von dem Searcher bereitgestellten Kontrolldaten ein oder mehrere der folgenden Parameter: Höhen der ermittelten Signalspitzen, Delay-Offsets der ermittelten Signalspitzen, und Zellen-Kennungen zu den ermittelten Signalspitzen.

Bei dem erfindungsgemäßen Verfahren kennzeichnet sich eine besonders vorteilhafte Ausführungsvariante dadurch, dass die Verarbeitung von Daten in einem aufgabenspezifischen Prozessor nach Konfigurierung desselben über eine Vielzahl von Zyklen, insbesondere über eine Vielzahl von Zeitschlitzen oder Zeitrahmen bei Zugrundelegung eines Übertragungssystems mit einer Zeitschlitz- und/oder Zeitrahmenstruktur durchgeführt wird.

Die Erfindung wird nachfolgend in beispielhafter Weise anhand der Zeichnung erläutert; in dieser zeigt:
Fig. 1 ein vereinfachtes Blockschaltbild der Hardware-Architektur eines Ausführungsbeispiels einer erfindungsgemäßen Sende-Empfangs-Einrichtung;
Fig. 2 ein Diagramm, in welchem die Kanalenergie gegenüber dem Zeitindex aufgetragen ist;
Fig. 3 eine ausschnittsweise und vereinfachte Darstellung einer Konfigurationstabelle zur Abspeicherung von Verwaltungsinformationen für einen aufgabenspezifischen Prozessor;
Fig. 4a ein Beispiel eines Datenwortes zum Konfigurieren eines aufgabenspezifischen Prozessors in Form einer RAKE-Datenverarbeitungsschaltung;
Fig 4b ein Beispiel eines Datenwortes zum Konfigurieren einer RAKE-Finger-Kombinationsstufe in der RAKE-Datenverarbeitungsschaltung; und
Fig. 5 ein Beispiel einer Befehlsfolge, anhand welcher der zeitliche Ablauf des Auslesens von Kontrolldaten eines Searchers über das Prozessor-Interface erläutert wird.

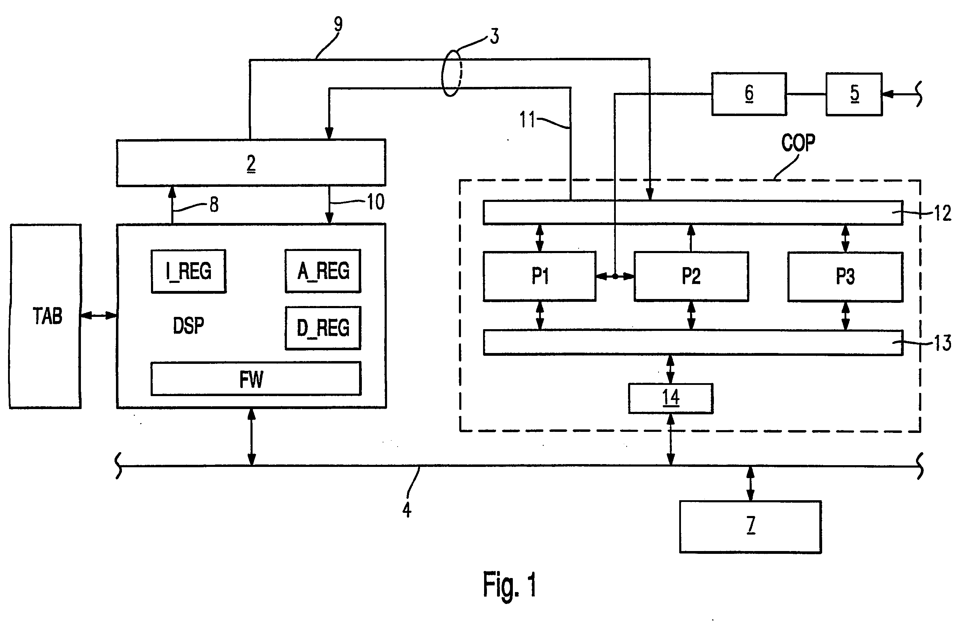

Fig. 1 zeigt ein Blockschaltbild der Hardware-Architektur eines Ausführungsbeispiels der Erfindung. Die Sende-Empfangs-Einrichtung umfaßt einen Mikroprozessor z.B. in Form eines digitalen Signalprozessors DSP, welcher über ein Coprozessor-Interface 2 und einen ersten Bus 3 mit einem Coprozessor COP in Verbindung steht. Eine weitere Datenverbindung zwischen dem DSP und dem Coprozessor COP wird über einen zweiten Bus 4 realisiert. Der zweite Bus 4 ist in der Regel mit einer Vielzahl von anderen peripheren Modulen (nicht dargestellt) der Sende-Empfangs-Einrichtung verbunden, die je nach Auslegung des Mobilfunk Sender-Empfängers von unterschiedlichem Typ sein können. Ferner kann der zweite Bus 4 z.B. auch mit einer Geräte-Schnittstelle für externe Zusatzeinrichtungen, z.B. Infrarot-Schnittstelle (nicht dargestellt), in Verbindung stehen. Ein Datenspeicher 7 ermöglicht eine Pufferung bzw. Zwischenspeicherung von Daten, welche über den zweiten Bus 4 übertragen werden.

In Fig. 1 sind ferner in vereinfachter Darstellung die Analog-Digital-Schnittstelle des Empfangspfads (Analog-DigitalUmsetzer) 5 und ein nachgeschaltetes peripheres Modul 6, das eine Verarbeitung der digitalisierten Empfangsdaten vornimmt. Bei dem peripheren Modul 6 kann es sich beispielsweise um ein Basisband-Filter oder andere im Empfangssignalpfad realisierte Datenverarbeitungsmodule handeln. Die Empfangsdaten können hier direkt in einige der aufgabenspezifischen Prozessoren P1 und P2 (z.B. RAKE und Searcher, wie später noch näher erläutert) eingespeist werden.

Der DSP umfaßt Programmcode (FW: Firmware), welcher üblicherweise in einem ROM abgelegt ist. Darüber hinaus enthält der DSP gemäß üblichem Aufbau ein Adressregister A_REG, ein Daten-Register D_REG und ein Befehlsregister I_REG.

Der Datenaustausch und die Synchronisierung mit dem Coprozessor COP erfolgt über das Coprozessor-Interface 2. Zu diesem Zweck enthält das Befehlsregister I_REG spezielle Befehle, die direkt den Coprozessor COP ansprechen. Die Übermittlung dieser Befehle vom DSP zum Coprozessor COP erfolgt über die unidirektionalen Datenverbindungen 8 und 9. Ferner kann der DSP über die Datenverbindungen 10 und 11 unter Mitwirkung des Coprozessor-Interfaces 2 Daten von dem Coprozessor COP beziehen. Die Datenverbindungen 10 und 11 können gegebenenfalls auch bidirektional ausgeführt sein. Der DSP steht ferner mit einem Tabellenspeicher TAB in Verbindung

Der Coprozessor COP umfaßt mehrere konfigurierbare, aufgabenspezifische Prozessoren P1, P2 und P3 (es können weitere nicht dargestellte aufgabenspezifische Prozessoren P4, P5 ,... vorgesehen sein), die über ein gemeinsames erstes Interface 12 mit dem ersten Bus 3 (Datenverbindungen 9 und 11) in Verbindung stehen. Ferner sind die aufgabenspezifischen konfigurierbaren Prozessoren P1, P2 und P3 über ein zweites Interface 13 und ein Register 14 an den zweiten Bus 4 angebunden.

Die aufgabenspezifischen, konfigurierbaren Prozessoren P1, P2 und P3 sind Hardware-Module, die bestimmte Sender- oder Empfänger-typische Grundfunktionen ausführen. Beispielsweise führt der Prozessor P1 eine RAKE-Datenverarbeitung, der Prozessor P2 eine Datenverarbeitung eines Searchers und der Prozessor P3 eine Kodierungs-Datenverarbeitung durch. Möglich ist ferner, dass ein oder mehrere weitere aufgabenspezifische Prozessoren P4, P5 (nicht dargestellt) eine Kodierungs-, Spreiz- und Verschachtelungseinheit sowie eine Modulationseinheit in Senderichtung beinhalten. Die Prozessoren P1 bis P3 sind nicht frei programmierbar sondern sind in Form einer parametrisierbaren sequenziellen Logikschältung ausgeführt. D.h., dass jeder der Prozessoren P1, P2 und P3 konstruktionsbedingt Daten gemäß einer bestimmten Grundfunktion, welche durch den Schaltungsaufbau vorgegeben ist, verarbeitet, diese Grundfunktion jedoch durch Vorgabe unterschiedlicher Parameterwerte gesteuert und verändert werden kann. Durch diese flexible Konfigurierbarkeit der Prozessoren P1, P2, und P3 wird gewährleistet, dass die Funktionalität des Coprozessors COP an unterschiedliche Erfordernisse (Dienste, Standards, Kanalverhältnisse usw.) anpassbar ist.

Erfindungsgemäß wird für die Überwachung und Konfigurierung des Coprozessors COP eine exklusive Anbindung (Coprozessor-Interface 2 und Bus 3) verwendet, auf welche keine weiteren Einheiten Zugriff haben. Dies garantiert die ständige Verfügbarkeit des Busses 3 und entkoppelt die Verwaltung des Coprozessors vom Datenverkehr des Busses 4, über welchen die eigentlichen Verarbeitungsdaten (z.B. nicht-zeitkritische Resultate der Datenverarbeitung in den aufgabenspezifischen Prozessoren) übertragen werden und welcher aufgrund seiner Anbindung an weitere Module keine ständige Verfügbarkeit gewährleisten kann.

Zeitkritische Resultate der Datenverarbeitung in den aufgabenspezifischen Prozessoren P1, P2, P3 werden im Gegensatz dazu über den Bus 3 und das Interface 2 übertragen. Das Abfragen von Kontrolldaten sowie die Konfigurierung der anwendungspezifischen Prozessoren P1, P2 und P3 des Coprozessors COP über den Bus 3 und das Interface 2 wird im folgenden anhand eines Beispiels näher erläutert.

Bei einer Signalakquisition im UMTS-(Universal Mobile Telecommunications System-)Standard wird auf der Abwärtsstrecke mittels eines ersten Synchronisationskanals (pSCH: primary synchronisation channel) zunächst eine Zeitschlitzsynchronisation und danach mittels eines modulierten zweiten Synchronisationskanals (sSCH: secondary synchronisation channel) eine Rahmensynchronisation durchgeführt. Anschließend ist dem Empfänger die Identität der Basisstation mit dem stärksten Sendesignal sowie die von dieser Basisstation verwendete Zeitschlitz- und Rahmenstruktur bekannt.

Die Erfassung der über den pSCH- und sSCH-Kanälen ausgestrahlten Synchronisationscodes wird durch eine Korrelationssignalverarbeitung vom Searcher (Prozessor P2) durchgeführt. Der DSP liest anschließend diesbezügliche Kontrolldaten aus dem Prozessor P2 aus und speichert diese in geeigneten Speicherbereichen des Tabellenspeichers TAB ab.

Nach erfolgter Zeitschlitz- und Rahmensynchronisierung weist der DSP den Searcher P2 an, Delay-Profile der verschiedenen empfangenen Kanäle aufzunehmen. Ein Delay-Profil stellt die zeitliche Charakteristik eines empfangenen Signals dar, welche sich aufgrund der Mehrwegeausbreitung aus den zu unterschiedlichen Zeiten eintreffenden Pfadbeiträgen des Signals zusammensetzt.

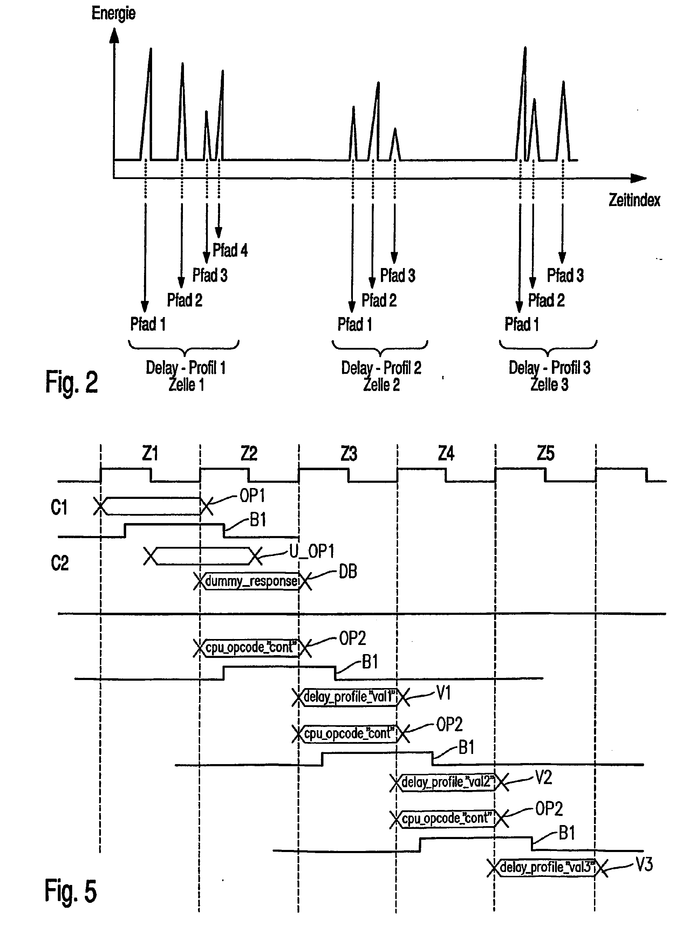

Fig. 2 zeigt die Delay-Profile, die für 3 verschiedene Mobilfunkzellen z.B. aus den dedizierten Pilotsignalen mit den Zellen-spezifischen Verwürfelungscodes gewonnen werden.

Nachdem die Delay-Profile in dem Searcher P2 ermittelt sind, liest der DSP die folgenden Kontrolldaten aus dem Searcher P2 aus:
- Höhe jeder ermittelten Signalspitze (Pfadenergie),
- Delay-Offset jeder ermittelten Signalspitze (zum inzwischen bekannten Zeitschlitzanfang), d.h. Pfadverzögerung,
- Zellen-Kennung zu jeder ermittelten Signalspitze; die Zellen-Kennung identifiziert die Zelle, dem der gefundene Pfad angehört. Die Zellen-Kennung ist bereits aus der Frame-Synchronisation und der Ermittlung des Zellen-spezifischen Verwürfelungscodes bekannt.

Diese Angaben werden ebenfalls in einem geeigneten Speicherbereich des Tabellenspeichers TAB gespeichert.

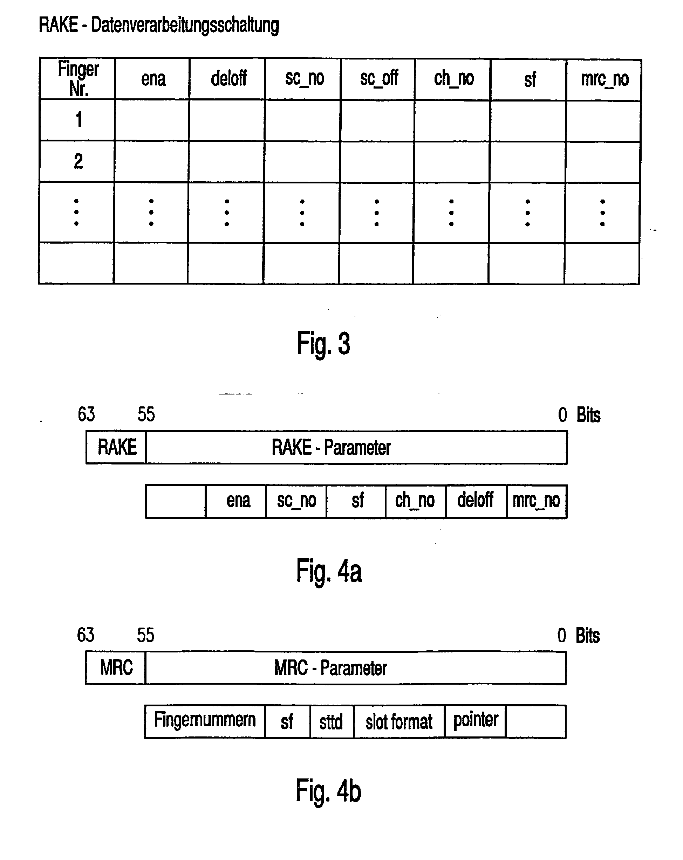

Anhand dieser Kontrolldaten und gegebenenfalls weiterer Informationen nimmt der DSP nachfolgend eine Konfiguration der RAKE-Datenverarbeitungsschaltung (d.h. des Prozessors P1) vor. Eine Tabelle, in welcher die Konfigurations-Parameter der RAKE-Datenverarbeitungsschaltung P1 dargestellt sind, ist in Fig. 3 gezeigt. Diese Tabelle ist ebenfalls in dem Tabellenspeicher TAB gespeichert und wird von dem DSP verwaltet.

In den Spalten der Tabelle sind die folgenden Angaben eingetragen: RAKE-Finger-Nummer, Betriebszustand des RAKE-Fingers (ena: enabled oder disabled), Delay-Offset des RAKE-Fingers (deloff), Verwürfelungscode-Kennung des RAKE-Fingers (sc_no), Delay-Offset des Verwürfelungscodes des RAKE-Fingers (sc_off), Spreiz-Code-Kennung des RAKE-Fingers (ch_no), Spreizfaktor des RAKE-Fingers (sf), und eine Kennnummer für die Finger-Kombinationsstufe im RAKE, die als MRC (Maximum Ratio Combiner) bezeichnet wird (mrc_no).

Die MRC-Kennnummer mrc_no gibt dabei die Beziehung zwischen dem Finger und dem von diesem Finger detektierten Kanal an, beispielsweise
mrc_no = 1 für den DPCH-Kanal,
mrc_no = 2, für den DSCH-Kanal, usw.

Dadurch wird der MRC in die Lage versetzt, jeweils die dem selben Kanal zugeordneten Finger zu kombinieren.

Die Aufgabe des DSP besteht nun darin, aus den vorliegenden Informationen eine bedarfsgerechte Zuteilung der zur Verfügung stehenden RAKE-Finger an die ermittelten Pfadbeiträge und Kanäle, die detektiert werden sollen, vorzunehmen. Die Zuteilung kann von einer Vielzahl von Umständen abhängen, z.B. auszuführende Aufgabe (z.B. Synchronisation), Signalstärkenverteilung im Delay-Profil (ergibt die Anzahl der benötigten Pfade), usw. Diese Verwaltungsaufgabe wird unter der Steuerung des DSP-internen Programms FW durchgeführt und ergibt die aktuellen Einträge für die in Fig. 3 dargestellte Tabelle.

Anschließend obliegt dem DSP die Programmierung bzw. Konfigurierung der RAKE-Datenverarbeitungsschaltung (Prozessor P1). Die Programmierung erfolgt über Befehlsworte, welche dem entsprechenden Prozessor (hier P1) über die unidirektionalen Datenverbindungen 8 und 9 zugeleitet werden. Die Fig. 4a und 4b zeigen eine mögliche Struktur solcher Befehlswörter.

Das in Fig. 4a gezeigte Befehlswort zur Konfigurierung des Prozessors P1 umfaßt beispielsweise 64 Bits. Die führenden 8 Bits (63 bis 56) identifizieren die RAKE-Datenverarbeitungsschaltung P1 als Zieleinheit des Befehlswortes. Hier wird ebenfalls der zu konfigurierende RAKE-Finger identifiziert. 56 Bits (55 bis 0) stehen zur Parametrisierung der gewünschten Konfiguration dieses Fingers zur Verfügung. Die entsprechenden Informationen ena, sc_no, sf, ch_no, deloff und mrc_no werden der in Figur 3 dargestellten Tabelle entnommen und in gleichlautenden Feldern geeigneter Größe im Befehlswort abgelegt.

Fig. 4b zeigt die Struktur eines Befehlswortes zur Konfigurierung des MRC. Dieser befindet sich ebenfalls in der RAKE-Datenverarbeitungsschaltung P1 und wird genauso wie ein RAKE-Finger durch die ersten acht Bits (MRC) des Befehlswortes adressiert.

Das nächste Feld (Fingernummern) gibt an, welche RAKE-Finger von dem MRC kombiniert werden sollen. Der diesen Fingern gemeinsame Spreizfaktor (sf) ist im nächsten Feld angegeben. Das Feld "sttd" (space time transmit diversity) gibt die Anzahl der senderseitig verwendeten Antennen an, d.h. bestimmt die senderseitige Antennendiversität. Das Feld "slot format" ermöglicht die Vorgabe verschiedener Datenformate für den Datenaustausch. Das Feld "pointer" setzt den Zeiger für das Auslesen einzelner lokaler Speicher in den RAKE-Fingern auf die einander entsprechenden Adressen.

Der MRC wird mittels der in Fig. 4b dargestellten Befehlsworte konfiguriert. Die Kombination der Daten für sämtliche zu detektierenden Kanäle bzw. Zellen (siehe Fig. 2) erfolgt dann ohne Wechselwirkung mit dem DSP.

Der DSP ist ferner in der Lage, das zweite Interface 13 so zu konfigurieren, dass dieses einen bestimmten Prozessor P1, P2 bzw. P3 anwählt, so dass die von diesem Prozessor berechneten Daten über das Register 14 an den zweiten Bus 4 geleitet werden. Ein peripheres Modul (oder der DSP selbst), das Verarbeitungsdaten von dem Coprozessor COP beziehen möchte, kann dann einen Lesezugriff auf das Register 14 mit stets der gleichen Adresse (der Adresse des Registers 14) ausführen. Durch die Konfigurierung des zweiten Interface 13 ist gewährleistet, dass die von dem Register 14 in Art eines FIFO ausgegebenen verarbeiteten Daten stets von dem "richtigen" aufgabenspezifischen Prozessor P1, P2 bzw. P3 oder einem Untermodul stammen.

Fig. 5 zeigt als Beispiel für die Kommunikation zwischen dem Mikroprozessor DSP und dem Coprozessor COP den zeitlichen Ablauf beim Auslesen der Delay-Profile aus dem Searcher P2. Die oberste Rechtecklinie repräsentiert dabei die Maschinenzyklen des DSP.

In einem ersten Konfigurierungschritt C1 teilt der DSP dem Coprozessor COP im Zyklus Z1 mittels eines geeigneten Befehlswortes OP1 mit, dass ein Delay-Profil aus dem Prozessor P2 (Searcher) ausgelesen werden soll. Der Searcher P2 bestätigt den Erhalt des Befehlswortes durch eine Bestätigung B1. In dem selben Zyklus Z1 kann der DSP dem Searcher P2 durch Übersendung eines Unterbefehlswortes U_OP1 mitteilen, zu welchem Teil des Delay-Spektrums die Kontrolldaten (Höhen, Delay-Offsets und Zellen-Kennungen der Signalspitzen) ausgelesen werden sollen (beispielsweise die einem oder mehreren bestimmten Delay-Profilen oder die einem bestimmten Zeitfenster zugeordneten Delays). Dieser Konfigurationsschritt ist mit C2 bezeichnet. Der Erhalt des Unterbefehlswortes U_OP1 kann durch eine Bestätigung seitens des Coprozessors COP beantwortet werden. Eine solche Bestätigung ist beim Konfigurieren des Coprozessors jedoch nicht erforderlich, d.h. der DSP kann auch durch anderweitige Erzeugung einer Dummy-Antwort DB im nächsten Zyklus Z2 von einer Unterbrechung seiner Tätigkeit abgehalten werden.

Nach erfolgter Konfigurierung des Searchers P2 erfolgt das Auslesen von Kontrolldaten - hier Signalhöhen, Zeitindizees und Zellen-Kennungen von Delay-Werten - mittels eines einzigen von dem DSP an den Searcher P2 übersandten Befehlswortes OP2. Der Befehl OP2 ("continue") bezieht sich auf die zuvor erfolgte Konfigurierung des Searchers P2 und teilt diesem mit, dass bei Erhalt jedes Befehlsworts OP2 ein weiterer Delay-Wert aus dem Searcher P2 ausgelesen und zum DSP zu übertragen ist.

Solange keine Umkonfigurierung stattfindet, wird dem DSP durch wiederholtes Abfragen des Searchers P2 mittels der Befehlsworte OP2 in den Zyklen Z2, Z3 und Z4 immer in den jeweils darauffolgenden Zyklus Z3, Z4 und Z5 ein (entsprechend der Konfiguration gewünschter) Delay-Wert V1, V2 bzw. V3 über das Coprozessor-Interface 2 und die Datenverbindungen 10 und 11 mitgeteilt. Eine Bestätigung der (über das Coprozessor-Interface 2 und die Datenverbindungen 8 und 9) erhaltenen Auslese-Anweisungen OP2 ist in Fig. 5 jeweils mit dem Bezugszeichen B1 bezeichnet.

Die Konfigurierung der RAKE-Datenverarbeitungsschaltung P1 kann in analoger Weise durchgeführt werden; dabei entsprechen die in Fig. 5 dargestellten Unterbefehlsworte U_OP1 den in den Figuren 4a bzw. 4b gezeigten RAKE- bzw. MRC-Konfigurationsbefehlen. Das dem Konfigurations-Befehlswort OP1 entsprechende erste Konfigurations-Befehlswort (welches mitteilt, dass die RAKE-Datenverabeitungsschaltung P1 durch Einschreiben von Parametern konfiguriert werden soll) konfiguriert im voraus den aufgabenspezifischen Prozessor P1 zur Dekodierung der anschließend erhaltenen Unterbefehlsworte (entsprechen U_OP1).

Die Kommunikation zwischen dem DSP und dem Coprozessor COP besteht allgemein also darin, dass durch einen Transfer eines Coprozessor-Hardware-spezifischen Codes (Befehlsworte, Unterbefehlsworte) der Coprozessor-Hardware die Verwendung nachfolgend ausgetauschter Konfigurationsdaten mitgeteilt wird. Das Auslesen von "zeitkritischen hochverdichteten Ergebnisdaten", vorstehend als Kontrolldaten bezeichnet, aus den Prozessoren P1, P2 und P3 erfolgt wie erläutert in der selben Weise. Sowohl die Programmierung mittels Konfigurations-Parametern als auch das Auslesen der Kontrolldaten erfolgt über den exklusiven Bus 3. Der Prozessor DSP nimmt vorzugsweise überhaupt nicht an der algorithmischen Bearbeitung von Roh- oder vorverarbeiteten Empfangsdaten teil sondern führt, wie beschrieben, allein Verwaltungsaufgaben ("scheduling") hinsichtlich der Beauftragung und Überwachung des Coprozessors COP durch. Letzterer führt nach einer Konfigurierung in der Regel über eine Vielzahl von Zeitrahmen bis zur nächsten Umkonfigurierung eine selbstständige Prozessierung von Verarbeitungsdaten durch, welche über den Bus 4 ausgetauscht werden.

Die vorstehend beschriebenen Aufgaben der Prozessoren P1 bis P3 sind beispielhafter Natur. Neben dem beschriebenen Demodulieren von Daten- und Steuerkanälen, der Delay-Schätzung einschließlich Zeitschlitz- und Rahmensynchronisation können Prozessoren auch zur Ausführung von Leistungsmessungen, zum Demodulieren speziell von Pilot-Symbolen zur Kanalschätzung, zur Kanalschätzung, zur SINR-Berechnung und zu weiteren Empfänger-typischen Verarbeitungsaufgaben vorgesehen sein. Ebenso können aufgabenspezifische Prozessoren für Sendeaufgaben vorgesehen sein.

Zusammenfassend ist festzustellen, dass durch die erfindungsgemäße Hardware-Architektur eine flexible, aufgabenspezifische und den praktischen Erfordernissen gerecht werdende Datenverarbeitung in einem Mobilfunk-Empfänger und -Sender ermöglicht wird, wobei durch die konfigurierbaren, aufgabenspezifischen Prozessoren P1, P2 und P3 eine ausreichend hohe Datenverarbeitungsgeschwindigkeit gewährleistet werden kann.

## Patentansprüche

1. Sende-Empfangs-Einrichtung für Mobilfunkanwendungen, insbesondere für eine Mobilstation der dritten oder höheren Generation, mit
- einem Mikroprozessor (DSP),
- einer Mehrzahl aufgabenspezifischer Prozessoren (P1, P2, P3), wobei jeder aufgabenspezifische Prozessor konfigurierbar ist, derart, dass eine Steuerung einer von dem aufgabenspezifischen Prozessor (P1, P2, P3) ausgeführten Grundfunktion durch Ändern von Konfigurations-Parametern möglicht ist, wobei der aufgabenspezifische Prozessor (P1, P2, P3) nach erfolgter Konfigurierung eine Datenverarbeitung entsprechend einer durch die Konfigurierung bestimmten Funktion durchführt,
- einem bidirektionalen Prozessor-Interface (2), über welches der Mikroprozessor (DSP) und die Mehrzahl der aufgabenspezifischen Prozessoren (P1, P2, P3) über einen ersten Bus (3) miteinander in Verbindung stehen,
- den ersten Bus (3) zur Verbindung des dem Mikroprozessor (DSP) zugeordneten Prozessor-Interfaces (2) mit den aufgabenspezifischen Prozessoren (P1, P2, P3), und
- einen zweiten Bus (4), über den der Mikroprozessor (DSP) und wenigstens einer der aufgabenspezifischen Prozessoren (P1, P2, P3) miteinander in Datenaustauschverbindung stehen,
**dadurch gekennzeichnet, daß**
- dem Mikroprozessor (DSP) eine Konfigurationstabelle (TAB) zugeordnet ist und die Einträge der Konfigurationstabelle (TAB) Kontrolldaten umfassen, die zuvor in einem aufgabenspezifischen Prozessor (P1, P2, P3) berechnet und über das Prozessor-Interface (2) zum Mikroprozessor (DSP) übertragen werden,
- der Mikroprozessor (DSP) die Konfigurationsbefehle für einen aufgabenspezifi.schen Prozessor (P1, P2, P3) durch Auswerten der Kontrolldaten der Konfigurationstabelle ermittelt,
- der Mikroprozessor (DSP) zum Konfigurieren der aufgabenspezifischen Prozessoren (P1, P2, P3) durch Übermittlung geeigneter Konfigurationsbefehle über das Prozessor-Interface (2) ausgelegt ist, und
- der erste Bus (3) zur Übertragung der Konfigurationsbefehle und der Kontrolldaten vorgesehen ist.

2. Sende-Empfangs-Einrichtung nach Anspruch 1,
**dadurch gekennzeichnet,**
- **dass** über den zweiten Bus (4) der Mikroprozessor (DSP), die Mehrzahl der aufgabenspezifischen Prozessoren (P1, P2, P3) und ferner zumindest ein Datenspeichermittel (7) der Sende-Empfangs-Einrichtung miteinander in Datenaustauschverbindung stehen.

3. Sende-Empfangs-Einrichtung nach Anspruch 2,
**dadurch gekennzeichnet,**
- **dass** an den zweiten Bus (4) weitere Hardware-Module und/oder externe Schnittstellen der Sende-Empfangs-Einrichtung angeschlossen sind.

4. Sende-Empfangs-Einrichtung nach einem der Ansprüche 2 oder 3,
**dadurch gekennzeichnet,**
- **dass** die mehreren aufgabenspezifischen Prozessoren (P1, P2, P3) über ein konfigurierbares Interface (14) mit dem zweiten Bus (4) verbindbar sind, und
- **dass** mittels eines vom Mikroprozessor (DSP) über das Prozessor-Interface (2) übertragenen Konfigurationsbefehls das konfigurierbare Interface (14) einem bestimmten aufgabenspezifischen Prozessor (P1, P2, P3) oder einem Untermodul desselben zugeordnet werden kann.

5. Sende-Empfangs-Einrichtung nach einem der vorhergehenden Ansprüche,
**dadurch gekennzeichnet,**
- **dass** ein erster aufgabenspezifischer Prozessor (P1) eine RAKE-Datenverarbeitungsschaltung ist.

6. Sende-Empfangs-Einrichtung nach Anspruch 5,
**dadurch gekennzeichnet,**
**dass** die Konfigurations-Parameter der RAKE-Datenverarbeitungsschaltung einen oder mehrere der folgenden Parameter umfassen:
- Betriebszustand (ena) eines RAKE-Fingers,
- Delay-Offset (deloff) eines RAKE-Fingers,
- Verwürfelungscode-Kennung (sc_no) für einen RAKE-Finger,
- Delay-Offset (sc_off) des Verwürfelungscodes für einen RAKE-Finger,
- Spreiz-Code-Kennung (ch_no) für eine RAKE-Finger, und
- Spreizfaktor (sf) für einen RAKE-Finger.

7. Sende-Empfangs-Einrichtung nach einem der vorhergehenden Ansprüche,
**dadurch gekennzeichnet,**
- **dass** ein zweiter aufgabenspezifischer Prozessor (P2) ein Searcher ist.

8. Sende-Empfangs-Einrichtung nach Anspruch 7,
**dadurch gekennzeichnet,**
**dass** von dem Searcher (P2) bereitgestellte Kontrolldaten ein oder mehrere der folgenden Parameter umfassen:
- Höhen der ermittelten Signalspitzen,
- Delay-Offsets der ermittelten Signalspitzen,
- Zellen-Kennungen der ermittelten Signalspitzen.

9. Verfahren zur Verarbeitung von Daten in einer Sende-Empfangs-Einrichtung für Mobilfunkanwendungen, insbesondere für eine Mobilstation der dritten oder höheren Generation, welche einen Mikroprozessor (DSP), eine Mehrzahl aufgabenspezifischer Prozessoren (P1, P2, P3), wobei jeder aufgabenspezifische Prozessor derart konfigurierbar ist, dass eine Steuerung einer von dem aufgabenspezifischen Prozessor (P1, P2, P3) ausgeführten Grundfunktion durch Ändern von Konfigurations-Parametern möglich ist, und ein den Mikroprozessor (DSP) mit dem aufgabenspezifischen Prozessor (P1, P2, P3) verbindendes bidirektionales Prozessor-Interface (2) umfasst,
**dadurch gekennzeichnet, daß** das Verfahren die folgenden Schritten umfasst :
- Ermitteln der Konfigurations-Parameter eines aufgabenspezifischen Prozessors (P1, P2, P3) durch Auswerten von zuvor in einem anderen aufgabenspezifischen Prozessor (P1, P2, P3) berechneten und dem Mikroprozessor (DSP) mitgeteilten Kontrolldaten,
- Übermitteln der Konfigurationsbefehle und/oder Kontrolldaten über einen ersten Bus (3) an den einen aufgabenspezifischen Prozessor (P1, P2, P3), wobei der erste Bus (3) das dem Mikroprozessor (DSP) zugeordnete Prozessor-Interface (2) mit jedem aufgabenspezifischen Prozessor (P1, P2, P3) verbindet,
- Konfigurieren des einen aufgabenspezifischen Prozessors (P1, P2, P3) durch Übermittlung geeigneter Konfigurationsbefehle von dem Mikroprozessor (DSP) über das Prozessor-Interface (2) an den einen aufgabenspezifischen Prozessor (P1, P2, P3),
- nach erfolgter Konfigurierung des einen aufgabenspezifischen Prozessors (P1, P2, P3) Beauftragen desselben mit der Verarbeitung von Daten entsprechend einer durch die Konfigurierung bestimmten Funktion, und
- Übermitteln von weiter zu verarbeitenden Daten von dem einen aufgabenspezifischen Prozessor mittels eines separaten zweiten Busses (4), über den der Mikroprozessor (DSP) und wenigstens einer der aufgabenspezifischen Prozessoren (P1, P2, P3) miteinander in Datenaustauschverbindung stehen.

10. Verfahren nach Anspruch 9,
wobei ein erster aufgabenspezifischer Prozessor (P1) eine RAKE-Datenverarbeitungsschaltung ist,
**dadurch gekennzeichnet**
**dass** der Konfigurationsschritt die Vorgabe eines oder mehrerer der folgenden Parameter umfasst:
- Betriebszustand (ena) eines RAKE-Fingers,
- Delay-Offset (deloff) eines RAKE-Fingers,
- Verwürfelungscode-Kennung (sc_no) für einen RAKE-Finger,
- Delay-Offset (sc_off) des Verwürfelungscodes für einen RAKE-Finger,
- Spreiz-Code-Kennung (ch_no) für eine RAKE-Finger,
- Spreizfaktor (sf) für einen RAKE-Finger.

11. Verfahren nach Anspruch 9 oder 10,
wobei ein zweiter aufgabenspezifischer Prozessor (P2) ein Searcher ist,
**gekennzeichnet durch**
den Schritt:
Übermittlung von Kontrolldaten des Searchers (P2) an den Mikroprozessor (DSP), welche einen oder mehrere der folgenden Parameter umfassen:
- Höhen der ermittelten Signalspitzen,
- Delay-Offsets der ermittelten Signalspitzen, und
- Zellen-Kennungen der ermittelten Signalspitzen.

12. Verfahren nach einem der Ansprüche 9 bis 11, **gekennzeichnet durch**
- dass die Verarbeitung von Daten in einem aufgabenspezifischen Prozessor (P1, P2, P3) nach Konfiguration desselben über eine Vielzahl von Zyklen, insbesondere über eine Vielzahl von Zeitschlitzen oder Zeitrahmen bei Zugrundelegung eines Übertragungssystems mit einer Zeitschlitz- und/oder Zeitrahmenstruktur, durchgeführt wird.

## Claims

1. Transmission/reception device for mobile radio applications, particularly for a third or higher generation mobile station, having
- a microprocessor (DSP),
- a plurality of task-specific processors (P1, P2, P3), where each task-specific processor can be configured such that a basic function performed by the task-specific processor (P1, P2, P3) can be controlled by changing configuration parameters,
where, following configuration, the task-specific processor (P1, P2, P3) performs data processing in line with a function determined by the configuration,
- a bidirectional processor interface (2) which connects the microprocessor (DSP) and the plurality of task-specific processors (P1, P2, P3) to one another via a first bus (3),
- the first bus (3) for connecting the processor interface (2) associated with the microprocessor (DSP) to the task-specific processors (P1, P2, P3), and
- a second bus (4), which connects the microprocessor (DSP) and at least one of the task-specific processors (P1, P2, P3) to one another for the purpose of data interchange,
**characterized in that**
- the microprocessor (DSP) has an associated configuration table (TAB) and the entries in the configuration table (TAB) comprise control data which are calculated beforehand in a task-specific processor (P1, P2, P3) and are transferred to the microprocessor (DSP) via the processor interface (2),
- the microprocessor (DSP) ascertains the configuration instructions for a task-specific processor (P1, P2, P3) by evaluating the control data in the configuration table,
- the microprocessor (DSP) is designed to configure the task-specific processors (P1, P2, P3) by transmitting suitable configuration instructions via the processor interface (2), and
- the first bus (3) is provided for transferring the configuration instructions and the control data.

2. Transmission/reception device according to Claim 1,
**characterized**
- **in that** the second bus (4) connects the microprocessor (DSP), the plurality of task-specific processors (P1, P2, P3) and also at least one data storage means (7) in the transmission/reception device to one another for the purpose of data interchange.

3. Transmission/reception device according to Claim 2,
**characterized**
- **in that** further hardware modules and/or external interfaces for the transmission/reception device are connected to the second bus (4).

4. Transmission/reception device according to either of Claims 2 and 3,
**characterized**
- **in that** the plurality of task-specific processors (P1, P2, P3) can be connected to the second bus (4) via a configurable interface (14), and
- **in that** a configuration instruction transferred via the processor interface (2) by the microprocessor (DSP) can be used to assign the configurable interface (14) to a particular task-specific processor (P1, P2, P3) or to a submodule thereof.

5. Transmission/reception device according to one of the preceding claims,
**characterized**
- **in that** a first task-specific processor (P1) is a RAKE data processing circuit.

6. Transmission/reception device according to Claim 5,
**characterized**
**in that** the configuration parameters for the RAKE data processing circuit comprise one or more of the following parameters:
- operating state (ena) of a RAKE finger,
- delay offset (deloff) of a RAKE finger,
- scrambling code identifier (sc_no) for a RAKE finger,
- delay offset (sc_off) of the scrambling code for a RAKE finger,
- spreading code identifier (ch_no) for a RAKE finger, and
- spreading factor (sf) for a RAKE finger.

7. Transmission/reception device according to one of the preceding claims,
**characterized**
- **in that** a second task-specific processor (P2) is a searcher.

8. Transmission/reception device according to Claim 7,
**characterized**
**in that** control data provided by the searcher (P2) comprise one or more of the following parameters:
- levels of the ascertained signal peaks,
- delay offsets of the ascertained signal peaks,
- cell identifiers of the ascertained signal peaks.

9. Method for processing data in a transmission/reception device for mobile radio applications, particularly for a third or higher generation mobile station, which has a microprocessor (DSP), a plurality of task-specific processors (P1, P2, P3), where each task-specific processor can be configured such that a basic function performed by the task-specific processor (P1, P2, P3) can be controlled by changing configuration parameters, and a bidirectional processor interface (2) which connects the microprocessor (DSP) to the task-specific processor (P1, P2, P3), **characterized in that** the method comprises the following steps:
- the configuration parameters for a task-specific processor (P1, P2, P3) are ascertained by evaluating control data which have been calculated beforehand in another task-specific processor (P1, P2, P3) and have been communicated to the microprocessor (DSP),
- the configuration instructions and/or control data are transmitted via a first bus (3) to one task-specific processor (P1, P2, P3), the first bus (3) connecting the processor interface (2) associated with the microprocessor (DSP) to each task-specific processor (P1, P2, P3),
- one task-specific processor (P1, P2, P3) is configured by transmitting suitable configuration instructions from the microprocessor (DSP) to one task-specific processor (P1, P2, P3) via the processor interface (2),
- following configuration of one task-specific processor (P1, P2, P3), the latter is instructed to process data in line with a function determined by the configuration, and
- further data to be processed are transmitted from one task-specific processor using a separate second bus (4), which connects the microprocessor (DSP) and at least one of the task-specific processors (P1, P2, P3) to one another for the purpose of data interchange.

10. Method according to Claim 9,
where a first task-specific processor (P1) is a RAKE data processing circuit,
**characterized**
**in that** the configuration step comprises the prescription of one or more of the following parameters:
- operating state (ena) of a RAKE finger,
- delay offset (deloff) of a RAKE finger,
- scrambling code identifier (sc_no) for a RAKE finger,
- delay offset (sc_off) of the scrambling code for a RAKE finger,
- spreading code identifier (ch_no) for a RAKE finger, and
- spreading factor (sf) for a RAKE finger.

11. Method according to Claim 9 or 10,
where a second task-specific processor (P2) is a searcher,
**characterized by** the following step:
control data from the searcher (P2) are transmitted to the microprocessor (DSP), said control data comprising one or more of the following parameters:
- levels of the ascertained signal peaks,
- delay offsets of the ascertained signal peaks, and
- cell identifiers of the ascertained signal peaks.

12. Method according to one of Claims 9 to 11,
**characterized**
- **in that** data are processed in a task-specific processor (P1, P2, P3) following configuration thereof using a multiplicity of cycles, particularly using a multiplicity of timeslots or timeframes when taking a transmission system with a timeslot and/or timeframe structure as a basis.

## Revendications

1. Dispositif émetteur-récepteur pour des applications en radiotéléphonie mobile, notamment pour une station mobile de la troisième génération ou d'une génération supérieure, comprenant
- un microprocesseur (DSP),
- une pluralité de processeurs (P1, P2, P3) spécifiques à une tâche, chaque processeur spécifique à une tâche pouvant être configuré de manière à ce qu'une commande d'une fonction de base exécutée par le processeur (P1, P2, P3) spécifique à une tâche soit possible par modification de paramètres de configuration, le processeur (P1, P2, P3) spécifique à une tâche effectuant, après que la configuration a été effectuée, un traitement de données correspondant à une fonction déterminée par la configuration,
- une interface (2) de processeur bidirectionnelle, par laquelle le microprocesseur (DSP) et la pluralité des processeurs (P1, P2, P3) spécifiques à une tâche communiquent entre eux par un premier bus (3),
- le premier bus (3) servant à relier l'interface (2) de processeur, associée au microprocesseur (DSP), aux processeurs (P1, P2, P3) spécifiques à une tâche et
- un deuxième bus (4) par lequel le microprocesseur (DSP) et au moins l'un des processeurs (P1, P2, P3) spécifiques à une tâche sont entre eux en liaison d'échange de données,
**caractérisé en ce que**
- il est associé au microprocesseur (DSP) une table (TAB) de configuration et les entrées de la table (TAB) de configuration comprennent des données de contrôle qui sont calculées au préalable dans un processeur (P1, P2, P3) spécifique à une tâche et qui sont transmises au microprocesseur (DSP) par l'interface (2) de processeur,
- le microprocesseur (DSP) détermine les instructions de configuration pour un processeur (P1, P2, P3) spécifique à une tâche en exploitant les données de contrôle du tableau de configuration,
- le microprocesseur (DSP) est conçu pour configurer les processeurs (P1, P2, P3) spécifiques à une tâche par transmission d'instructions de configuration appropriées par l'interface (2) de processeur et
- le premier bus (3) est prévu pour la transmission des instructions de configuration et des données de contrôle.

2. Dispositif émetteur-récepteur suivant la revendication 1,
**caractérisé**
- **en ce que** par le deuxième bus (4), le microprocesseur (DSP), la pluralité des processeurs (P1, P2, P3) spécifiques à une tâche et, en outre, au moins un moyen (7) de mémorisation de données du dispositif émetteur-récepteur sont entre eux en liaison d'échange de données.

3. Dispositif émetteur-récepteur suivant la revendication 2,
**caractérisé**
- **en ce qu'**il est raccordé au deuxième bus (4) d'autres modules matériel et/ou des interfaces extérieures du dispositif émetteur-récepteur.

4. Dispositif émetteur-récepteur suivant l'une des revendications 2 ou 3,
**caractérisé**
- **en ce que** les plusieurs processeurs (P1, P2, P3) spécifiques à une tâche peuvent être reliés au deuxième bus (4) par une interface (14) qui peut être configurée et
- **en ce que**, au moyen d'une instruction de configuration transmise par le microprocesseur (DSP) par l'interface (2) de processeur, l'interface (14) qui peut être configurée peut être associée à un processeur (P1, P2, P3) déterminé spécifique à une tâche ou à l'un de ses sous-modules.

5. Dispositif émetteur-récepteur suivant l'une des revendications précédentes,
**caractérisé**
- **en ce qu'**un premier processeur (P1) spécifique à une tâche est un circuit de traitement de données RAKE.

6. Dispositif émetteur-récepteur suivant la revendication 5,
**caractérisé**
- **en ce que** les paramètres de configuration du circuit de traitement de données RAKE comprennent un ou plusieurs des paramètres suivants :
- état (ena) de fonctionnement d'un doigt RAKE,
- décalage de retard (deloff) d'un doigt RAKE,
- code de brouillage-caractéristique (sc_no) pour un doigt RAKE,
- décalage de regard (sc_off) du code de brouillage par un doigt RAKE,
- code d'étalement-caractéristique (ch_no), pour un doigt RAKE et
- facteur (sf) d'étalement pour un doigt RAKE.

7. Dispositif émetteur-récepteur suivant l'une des revendications précédentes,
**caractérisé**
- **en ce qu'**un deuxième processeur (P2) spécifique à une tâche est un searcher.

8. Dispositif émetteur-récepteur suivant la revendication 7,
**caractérisé**
**en ce que** de données de contrôle préparées par le searcher (P2) comprennent un ou plusieurs des paramètres suivants :
- hauteur des crêtes de signal déterminées,
- décalage de retard des crêtes de signal déterminées,
- caractéristique de cellules des crêtes de signal déterminées.

9. Procédé de traitement de données dans un dispositif émetteur-récepteur pour des applications en radiotéléphonie mobile, notamment pour une station mobile de la troisième génération ou d'une génération supérieure, qui comprend un microprocesseur (DSP), une pluralité de processeurs (P1, P2, P3) spécifiques à une tâche, chaque processeur spécifique à une tâche pouvant être configuré de manière à ce qu'une commande d'une fonction de base exécutée par le processeur (P1, P2, P3) spécifique à une tâche soit possible par modification de paramètres de configuration et une interface (2) de processeur bidirectionnelle reliant le microprocesseur (DSP) aux processeurs (P1, P2, P3) spécifiques à une tâche,
**caractérisé en ce que** le procédé comprend les stades suivants :
- on détermine les paramètres de configuration d'un processeur (P1, P2, P3) spécifique à une tâche en exploitant des données de contrôle calculées auparavant dans un autre processeur (P1, P2, P3) spécifique à une tâche et transmises au microprocesseur (DSP),
- on transmet les instructions de configuration et/ou les données de contrôle par un premier bus (3) à l'un des processeurs (P1, P2, P3) spécifiques à une tâche, le premier bus (3) reliant l'interface (2) de processeur associé au microprocesseur (DSP) à chaque processeur (P1, P2, P3) spécifique à une tâche,
- on configure l'un des processeurs (P1, P2, P3) spécifiques à une tâche en transmettant des instructions de configuration appropriées par le microprocesseur (DSP) par l'interface (2) de processeur à l'un des processeurs (P1, P2, P3) spécifiques à une tâche,
- la configuration de l'un des processeurs (P1, P2, P3) spécifiques à une tâche effectuée, on le charge du traitement de données conformément à une fonction déterminée par la configuration et
- on transmet des données à traiter davantage de l'un des processeurs spécifiques à une tâche au moyen d'un deuxième bus (4) distinct par lequel le microprocesseur (DSP) et au moins l'un des processeurs (P1, P2, P3) spécifiques à une tâche sont entre eux en liaison d'échange de données.

10. Procédé suivant la revendication 9,
dans lequel un premier processeur (P1) spécifique à une tâche est un circuit de traitement de données RAKE,
**caractérisé en ce que** le stade de configuration comprend la prescription d'un ou de plusieurs des paramètres suivants :
- état (ena) de fonctionnement d'un doigt RAKE,
- décalage de retard (deloff) d'un doigt RAKE,
- code de brouillage-caractéristique (sc_no) pour un doigt RAKE,
- décalage de regard (sc_off) du code de brouillage par un doigt RAKE,
- code d'étalement-caractéristique (ch_no) pour un doigt RAKE et
- facteur (sf) d'étalement pour un doigt RAKE.

11. Procédé suivant la revendication 9 ou 10,
dans lequel un deuxième processeur (P2) spécifique à une tâche est un searcher,
**caractérisé par** le stade dans lequel :
on détermine des données de contrôle du searcher (P2) sur le microprocesseur (DSP) qui comprennent un ou plusieurs des paramètres suivants :
- hauteur des crêtes de signal déterminées,
- décalage de retard des crêtes de signal déterminées,
- caractéristique de cellules des crêtes de signal déterminées.

12. Procédé suivant l'une des revendications 9 à 11,
**caractérisé en ce que**
- on effectue le traitement de données dans un processeur (P1, P2, P3) spécifique à une tâche après configuration de celui-ci sur une pluralité de cycles, notamment sur une pluralité de créneaux temporels ou de trames temporelles sur la base d'un système de transmission ayant une structure à créneau temporel et/ou à trame temporelle.
